# EUROPEAN PATENT APPLICATION

(11) **EP 4 340 349 A1**
(43) Date of publication of application: **20.03.2024**
(21) Application number: 23163517.8
(22) Date of filing: 22.03.2023
(51) Int. Cl.: H04N 1/32, H04N 1/327, H04N 1/00, G06F 3/12, H04L 12/54

(54) **IMAGE FORMING APPARATUS, IMAGE FORMING PROGRAM, IMAGE PROCESSING SYSTEM, AND IMAGE FORMING METHOD FOR TRANSMITTING A REMOTE PROCESSED FORMED IMAGE TO A FACSIMILE APPARATUS**

(30) Priority: 16.09.2022 JP 2022148047
(71) Applicant: FUJIFILM Business Innovation Corp., Minato-ku Tokyo (JP)
(72) Inventor: SUGII, Masato, Yokohama-shi, Kanagawa (JP); WATANABE, Satoshi, Yokohama-shi, Kanagawa (JP); NONAKA, Hiroshige, Yokohama-shi, Kanagawa (JP); HOSHINO, Haruhisa, Yokohama-shi, Kanagawa (JP); SATO, Yusuke, Yokohama-shi, Kanagawa (JP)
(74) Representative: Kurig, Thomas

(57) **Abstract**

An image forming apparatus includes a processor configured to form an image, transmit the image to a server that generates a processed image of the image by executing a designated image process on the image and is on an outside of a firewall, and, in a case where the image includes designation information designating the processed image to be transmitted to an instructed transmission destination via a fax line, request an alternative apparatus to fax-transmit the processed image to the transmission destination, the alternative apparatus being on an inside of the firewall together and having a fax function.

## Description

### BACKGROUND OF THE INVENTION

### (i) Field of the Invention

The present disclosure relates to an image forming apparatus, an image forming program, an image processing system, and an image forming method.

### (ii) Description of Related Art

JP6264800B discloses an information processing system including a plurality of information processing apparatuses that execute a plurality of processes defined by workflow information. The workflow information is information for defining an order of a plurality of processes and an information processing apparatus as an execution subject for each of the plurality of processes and, in which one information processing apparatus selected among the plurality of information processing apparatuses can be defined as the execution subject. Regarding the plurality of information processing apparatuses, an information processing apparatus defined as the execution subject executes each of a plurality of processes defined in the workflow information in the defined order, and one information processing apparatus selected in accordance with a predetermined determination condition executes a process having an execution subject defined to be one information processing apparatus selected among the plurality of information processing apparatuses in the workflow information. The workflow information defines a connection process between a process having an execution subject that is a first information processing apparatus and a process having an execution subject that is a second information processing apparatus. In the connection process, the first information processing apparatus transmits target data to the second information processing apparatus from the first information processing apparatus, changes the execution subject for the next process to the second information processing apparatus. After that, in a case where the connection process having a probability that the execution subject is brought back to the first information processing apparatus is included, the first information processing apparatus transitions the execution to the next connection process. In the next connection process, the first information processing apparatus receives, from the second information processing apparatus, information indicating that the execution subject is changed from the second information processing apparatus to the first information processing apparatus. In a case where the execution subject is changed to the first information processing apparatus, the target data is received from the second information processing apparatus.

### SUMMARY OF THE INVENTION

Since it takes time to execute an image process by the image forming apparatus, the image process may be requested to a server having performance higher than the image processing apparatus.

As a result of the image process on the server, for example, in a case where information designating fax transmission in which a specific device is set as a transmission destination is detected from an image that is an image process target, the processed image obtained by the server executing the image process is fax-transmitted to the designated apparatus.

However, in a case where the processed image is fax-transmitted from the server to the designated apparatus, the fax number of a transmission source is different from the fax number assigned to the image forming apparatus. Thus, the processed image may not be recognized from the viewpoint of information security.

Therefore, the image forming apparatus that has requested the image process may receive the processed image from the server and fax-transmit the processed image to the apparatus designated as the transmission destination. However, the image forming apparatus is not necessarily provided with the fax function.

In such a case, a user needs to select an image forming apparatus having a fax function in advance and request the image process to the server so that a case where an image includes information designating the image to be fax-transmitted can be handled.

An object of the present disclosure is to provide an image forming apparatus, an image forming program, an image processing system, and an image forming method capable of transmitting a processed image obtained by an image process of a server to a designated transmission destination via a fax line even in a case where the image forming apparatus that requests the server to execute the image process does not have a fax function.

According to a first aspect of the present disclosure, there is provided an image forming apparatus including a processor configured to form an image, transmit the image to a server that generates a processed image of the image by executing a designated image process on the image and is on an outside of a firewall, and, in a case where the image includes designation information designating the processed image to be transmitted to an instructed transmission destination via a fax line, request an alternative apparatus to fax-transmit the processed image to the transmission destination, the alternative apparatus being on an inside of the firewall together and having a fax function.

According to a second aspect of the present disclosure, there is provided the image forming apparatus according to the first aspect, in which the processor is configured to receive the processed image from the server, detect the alternative apparatus, transfer the processed image received from the server to the alternative apparatus, and request the alternative apparatus to fax-transmit the processed image to the transmission destination.

According to a third aspect of the present disclosure, there is provided the image forming apparatus according to the first aspect, in which the processor is configured to transmit apparatus identification information for identifying the alternative apparatus detected in advance to the server together with the image, receive acquisition information from the server, the acquisition information being used in a case where the alternative apparatus acquires the processed image from the server, transfer the acquisition information received from the server to the alternative apparatus to cause the alternative apparatus to acquire a process result of the image from the server by using the acquisition information and to acquire the processed image from the server, and, in a case where the processed image is designated to be transmitted to the transmission destination via the fax line in the acquired process result of the image, request the acquired processed image to be fax-transmitted to the transmission destination.

According to a fourth aspect of the present disclosure, there is provided the image forming apparatus according to the second or third aspect, in which the processor is configured to detect one alternative apparatus from a plurality of the alternative apparatuses set in advance by an administrator.

According to a fifth aspect of the present disclosure, there is provided the image forming apparatus according to the second or third aspect, in which the processor is configured to detect the alternative apparatus by referring to a management information base of each apparatus that is on the inside of the firewall together and is connected to a communication line.

According to a sixth aspect of the present disclosure, there is provided the image forming apparatus according to the fifth aspect, in which the processor is configured to, in a case where a plurality of the alternative apparatuses are detected, acquire a fax usage status in each of the alternative apparatuses via the communication line, and request the alternative apparatus that is not performing fax transmission to fax-transmit the processed image to the transmission destination among the plurality of detected alternative apparatuses.

According to a seventh aspect of the present disclosure, there is provided an image forming program causing a processor to execute a process including forming an image, transmitting the image to a server that generates a processed image of the image by executing a designated image process on the image and is on an outside of a firewall, and requesting, in a case where the image includes designation information designating the processed image to be transmitted to an instructed transmission destination via a fax line, an alternative apparatus to fax-transmit the processed image to the transmission destination, the alternative apparatus being on an inside of the firewall together and having a fax function.

According to an eight seventh aspect of the present disclosure, there is provided an image processing system including a server being on an outside of a firewall and including a first processor configured to acquire an image, generate a processed image of the acquired image by executing a designated image process on the image, and specify a transmission destination of the process image, and an image forming apparatus including a second processor configured to form an image, transmit the image to the server, and, in a case where the transmission destination of the process image acquired from the image by the server is an apparatus connected via a fax line, an alternative apparatus to fax-transmit the processed image to the transmission destination acquired from the image, request the alternative apparatus being on an inside of the firewall and having a fax function.

According to a ninth aspect of the present disclosure, there is provided an image forming method including forming an image, transmitting the image to a server that generates a processed image of the image by executing a designated image process on the image and is on an outside of a firewall, and requesting, in a case where the image includes designation information designating the processed image to be transmitted to an instructed transmission destination via a fax line, an alternative apparatus to fax-transmit the processed image to the transmission destination, the alternative apparatus being on an inside of the firewall together and having a fax function.

According to the first aspect, the seventh aspect, the eighth aspect, and the ninth aspect, there is an effect that, even in a case where the image forming apparatus that requests the server to execute the image process does not have a fax function, it is possible to transmit the processed image obtained by the image process of the server to the designated transmission destination via the fax line.

According to the second aspect, the image forming apparatus has an effect that it is possible to fax-transmit the processed image to the alternative apparatus without causing the alternative apparatus to communicate with the server.

According to the third aspect, the image forming apparatus has an effect that it is possible to fax-transmit the processed image to the alternative apparatus without acquiring the processed image from the server.

According to the fourth aspect, there is an effect that it is possible to fax-transmit the processed image to the alternative apparatus without causing a user to select the alternative apparatus.

According to the fifth aspect, there is an effect that it is possible to detect the alternative apparatus even though the administrator registers the alternative apparatus in the image forming apparatus in advance.

According to the sixth aspect, there is an effect that it is possible to quickly transmit the processed image to the transmission destination as compared with a case where the alternative apparatus during the fax transmission is requested to perform the fax transmission.

### BRIEF DESCRIPTION OF THE DRAWINGS

Exemplary embodiment(s) of the present invention will be described in detail based on the following figures, wherein:
Fig. 1 is a diagram illustrating a system configuration example in an image processing system;
Fig. 2 is a sequence diagram illustrating an example of a data flow in an image processing system according to a first exemplary embodiment;
Fig. 3 is a diagram illustrating a configuration example of a main part of an electrical system of a server;
Fig. 4 is a diagram illustrating a configuration example of a main part of an electrical system of an image forming apparatus;
Fig. 5 is a flowchart illustrating an example of a flow of a document scanning process by the image forming apparatus in the first exemplary embodiment;
Fig. 6 is a flowchart illustrating an example of a flow of a server process by the server in the first exemplary embodiment;
Fig. 7 is a sequence diagram illustrating an example of a data flow in an image processing system according to a second exemplary embodiment;
Fig. 8 is a flowchart illustrating an example of a flow of a document scanning process by an image forming apparatus in the second exemplary embodiment;
Fig. 9 is a flowchart illustrating an example of a flow of a document transmission process by an alternative apparatus; and
Fig. 10 is a flowchart illustrating an example of a flow of a server process by a server in the second exemplary embodiment.

### DETAILED DESCRIPTION OF THE INVENTION

Hereinafter, exemplary embodiments of the present disclosure will be described with reference to the accompanying drawings. The identical components and the identical processes are denoted by the identical reference signs in the drawings, and repetitive description will be omitted.

### <First Exemplary Embodiment>

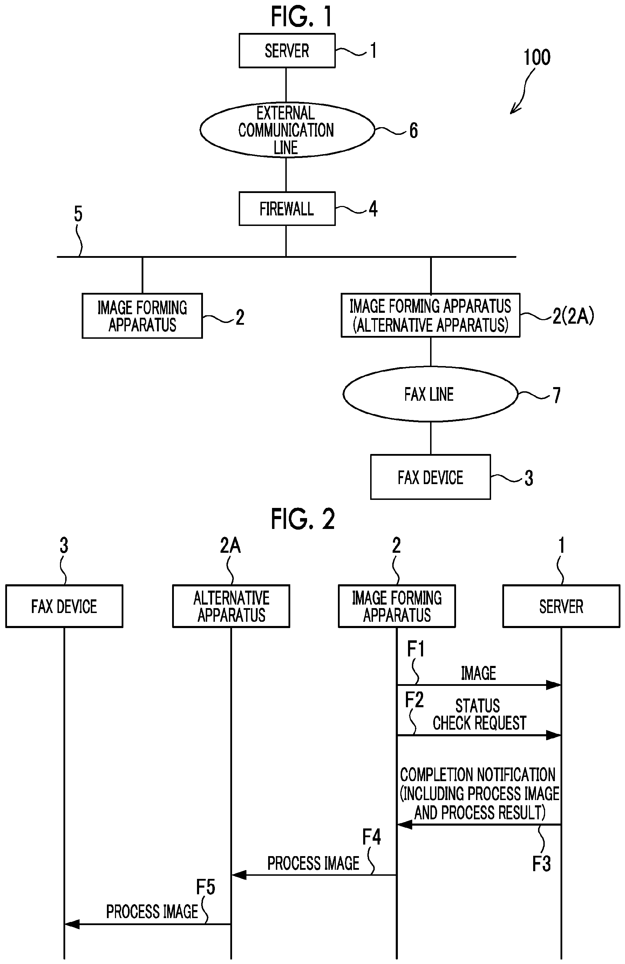

Fig. 1 is a diagram illustrating a system configuration example in an image processing system 100 in the present disclosure. The image processing system 100 includes a server 1, an image forming apparatus 2, and a firewall 4. The image forming apparatus 2 and the firewall 4 are connected to an internal communication line 5, and the server 1 and the firewall 4 are connected to an external communication line 6. There is an image forming apparatus 2 having a fax function among image forming apparatuses 2, and such an image forming apparatus 2 is connected to a fax device 3 via a fax line 7.

For easy description, a place where the image forming apparatus 2 and the firewall 4 connected to the internal communication line 5 are installed with the firewall 4 as a boundary is referred to as an "inside of the firewall 4". Further, a place where the server 1 connected to the external communication line 6 is installed with the firewall 4 as a boundary is referred to as an "outside of the firewall 4". The inside of the firewall 4 corresponds to, for example, the space of a company building where a user works, and the outside of the firewall 4 corresponds to, for example, a cloud space.

Therefore, the internal communication line 5 is an example of a closed communication line such that only a user working at a company is permitted to perform connection. For example, an internal local area network (LAN) is used as the internal communication line 5. The external communication line 6 is an example of a public line to which a connection by, for example, an unspecified number of users is permitted. For example, the Internet is used.

The image forming apparatus 2 is an apparatus that forms an image in accordance with an instruction of a user. For example, a printer, a scanner, a copying machine, a fax device 3, and the like are examples of the image forming apparatus 2, and an apparatus having a plurality of functions of these devices is also an example of the image forming apparatus 2. The type of the image forming apparatus 2 is not limited as long as the image forming apparatus has the function of forming an image as described above. However, the image forming apparatus 2 in the present disclosure includes at least a function of a scanner as an example, and it is assumed that the image forming apparatus 2 forms an image of a document by optically scanning the document prepared by the user with a scanner.

The image forming apparatus 2 not only forms an image of a document, but also provides the user with a menu of an image process such as an optical character recognition (OCR) process of performing character recognition on an image of a document, for example. The user selects an intended image process, and thus the image process is executed on the formed image.

Since an image has a larger data volume than, for example, text data, in a case where the instructed image process is executed by the image forming apparatus 2, a load is applied to the image forming apparatus 2, and it may take a long time to end the image process. Therefore, the image forming apparatus 2 transmits the formed image to the server 1, and causes the server 1 to execute the image process on the image.

The server 1 executes an image process instructed by the image forming apparatus 2 by receiving an image from the image forming apparatus 2, and editing and processing the received image. Then, the server 1 transmits the image subjected to the image process to the image forming apparatus 2. The image after the instructed image process is executed is referred to as a "process image" below. The process image is an example of a processed image.

An operation of the image processing system 100 will be described below based on a case where the user selects a menu for executing an image process of scanning a destination that designating a transmission destination of a document from an image of the document and transmitting the process image of the document to the scanned destination.

That is, the document includes the destination of the document in advance, and the user executes a process of transmitting the process image of the document to the designated destination only by scanning the document with the scanner of the image forming apparatus 2. The destination of the document may be displayed as text, or may be displayed as a bar code. The destination of the document may be displayed by a hyperlink indicating a storage location of information in which the destination of the document is described. The destination included in the document is an example of designation information in which a transmission destination of the process image is designated. Since the document includes the destination of the document in advance, the process image of the document is transmitted to an apparatus indicated by the destination even though the user does not input the destination of the document from the image forming apparatus 2 each time the document is scanned.

As the destination of the document, for example, in addition to various devices connected to the internal communication line 5 and the external communication line 6, the fax device 3 that transmits an image via the fax line 7 may be designated. In a case where the destination of the document that has been received from the server 1 together with the process image is a device connected to the internal communication line 5, the image forming apparatus 2 transmits the image of the document to the apparatus designated as the destination via the internal communication line 5. In a case where the destination of the document received from the server 1 together with the process image is a device connected to the external communication line 6, the image forming apparatus 2 transmits the image of the document to the device connected to the external communication line 6 via the firewall 4. In a case where the destination of the document received from the server 1 together with the process image is the fax device 3, the image forming apparatus 2 transmits the image of the document to the fax device 3 via the fax line 7.

Since any image forming apparatus 2 caused to scan the document by the user is connected to the internal communication line 5, the image of the document can be transmitted from any image forming apparatus 2 as long as the destination of the document is the device connected to the internal communication line 5 and the external communication line 6. However, it is not limited that not all image forming apparatuses 2 connected to the internal communication line 5 has a fax function. Therefore, in order for the image forming apparatus 2 which does not have the fax function to transmit the image of the document to the fax device 3, the image of the document is transferred to the image forming apparatus 2 having the fax function, and transmission to the fax device 3 is requested. As described above, since the image forming apparatus 2 having the fax function may transmit the process image of the document to the fax device 3 designated as the destination in place of the other image forming apparatus 2, such an image forming apparatus 2 is set to be particularly referred to as an "alternative apparatus 2A". In other words, in a case where the description "image forming apparatus 2" is made without particular notice, it means that the image forming apparatus 2 does not have the fax function. The device connected to the internal communication line 5 and the external communication line 6 is set to be referred to as an "Internet protocol (IP) device". That is, the image forming apparatus 2 is also an example of the IP apparatus.

The firewall 4 restricts the access from the outside of the firewall 4 to the inside of the firewall 4. Therefore, the server 1 is not permitted to transmit the process image to the image forming apparatus 2 with the server 1 as a starting point. In this case, the server 1 transmits the process image to the image forming apparatus 2 as a response to polling from the image forming apparatus 2. On the other hand, the firewall 4 permits an access from the image forming apparatus 2 starting from the image forming apparatus 2 to the server 1.

There are no restrictions on the connection forms of the internal communication line 5 provided on the inside of the firewall 4 and the external communication line 6 provided on the outside of the firewall 4, and the connection form may be either a wireless form or a wired form, or a mixture of a wireless form and a wired form.

Next, a data flow in the image processing system 100 will be described.

Fig. 2 is a sequence diagram illustrating an example of a data flow in the image processing system 100 in a case where the destination of the document scanned by the image forming apparatus 2 is the fax device 3.

First, the image forming apparatus 2 transmits an image of a document scanned by the scanner to the server 1 (Fig. 2: Sequence F1). An image process is executed in the server 1 that has received the image of the document, and the destination of the document is acquired from the process image.

On the other hand, the image forming apparatus 2 transmits a status check request to the server 1 in order to check the process status of the image process requested to the server 1 (Fig. 2: Sequence F2).

As described above, the server 1 is not permitted to transmit the process image to the image forming apparatus 2 starting from the server 1. Thus, the server 1 transmits a completion notification of the image process to the image forming apparatus 2 being a transmission source of the status check request in response to the status check request after the end of the image process (Fig. 2: Sequence F3). A process result of the image process and the process image of the document obtained by the image process are added to the completion notification. The process result of the image process includes the destination of the document acquired from the process image by the server 1.

The image forming apparatus 2 that has received the completion notification from the server 1 uses, as a reference, the destination received as the notification from the server 1. In a case where the destination is the fax device 3, the image forming apparatus 2 transfers the process image to which the destination is added to the alternative apparatus 2A (Fig. 2: Sequence F4).

Upon receiving the process image, the alternative apparatus 2A transmits the process image to the fax device 3 designated by the destination via the fax line 7 (Fig. 2: Sequence F5). As described above, the fax device 3 is an example of a transmission destination to which the process image is transmitted via the fax line 7.

As described above, the process image of the document scanned by the image forming apparatus 2 is delivered to the fax device 3.

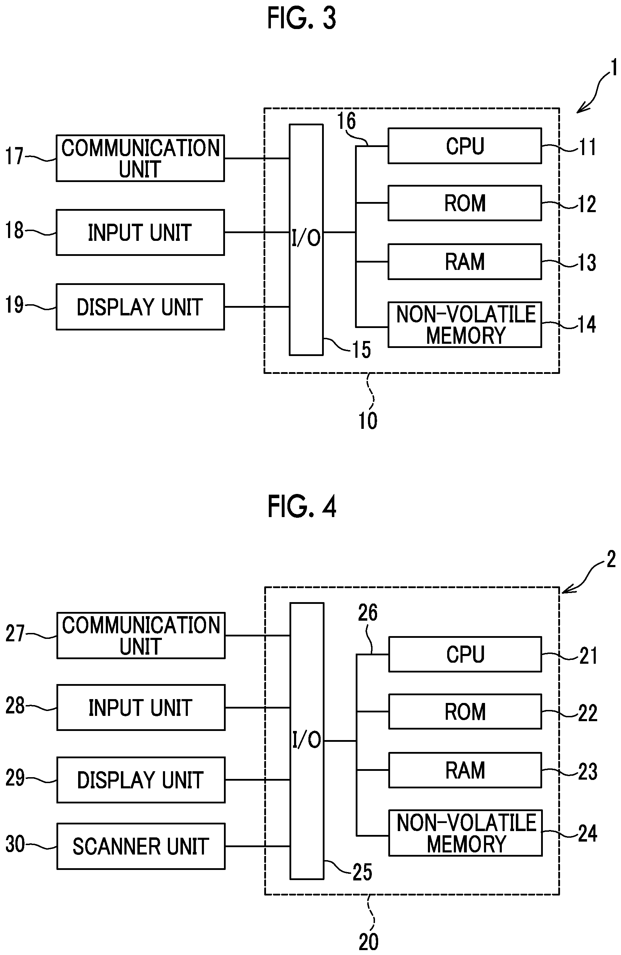

The image forming apparatus 2 and the server 1 that execute such processes can be configured by using a computer 10 and a computer 20, respectively. Fig. 3 is a diagram illustrating a configuration example of a main part of an electrical system of the server 1 configured by using the computer 10.

The computer 10 includes a central processing unit (CPU) 11 which is an example of a first processor that executes a process in the server 1, a read only memory (ROM) 12 that stores a startup program (Basic Input Output System (BIOS)) that executes a startup process of the computer 10, a random access memory (RAM) 13 used as a temporary work area of the CPU 11, a non-volatile memory 14, and an input/output interface (I/O) 15. The CPU 11, the ROM 12, the RAM 13, the non-volatile memory 14, and the I/O 15 are connected to each other via a bus 16.

The non-volatile memory 14 is an example of a storage device that retains stored information even though power supplied to the non-volatile memory 14 is cut off. As the non-volatile memory 14, for example, a semiconductor memory is used, and a hard disk may be used.

For example, a communication unit 17, an input unit 18, and a display unit 19 are connected to the I/O 15.

The communication unit 17 is connected to the external communication line 6 and includes a communication protocol for performing data communication with the image forming apparatus 2 via the firewall 4.

The input unit 18 is an example of a unit that receives an operation of an administrator that manages the server 1 and notifies the CPU 11 of the operation, and includes, for example, a button, a touch panel, a keyboard, a mouse, and a pointing device.

The display unit 19 is an example of a unit that visually displays information processed by the CPU 11, and includes, for example, a liquid crystal display and an organic electroluminescence (EL) display.

On the other hand, Fig. 4 is a diagram illustrating a configuration example of a main part of an electrical system of the image forming apparatus 2 configured by using the computer 20.

The computer 20 includes a CPU 21 which is an example of a second processor that executes a process in the image forming apparatus 2, a ROM 22 that stores a BIOS of executing a startup process of the computer 20, a RAM 23 used as a temporary work area of the CPU 21, a non-volatile memory 24, and an I/O 25. The CPU 21, the ROM 22, the RAM 23, the non-volatile memory 24, and the I/O 25 are connected to each other via a bus 26.

A communication unit 27 is connected to the internal communication line 5 and includes a communication protocol for performing data communication with the alternative apparatus 2A and the other image forming apparatuses 2. Further, the communication unit 27 includes a communication protocol for performing data communication with the server 1 via the firewall 4. In a case where the image forming apparatus 2 is the alternative apparatus 2A, the communication unit 27 further includes a communication protocol for performing fax communication with the fax device 3 via the fax line 7.

The input unit 28 is an example of a unit that receives an operation of the user on the image forming apparatus 2 and notifies the CPU 21 of the operation, and includes, for example, a button, a touch panel, and a pointing device.

The display unit 29 is an example of a unit that visually displays information processed by the CPU 21, and includes, for example, a liquid crystal display and an organic EL display.

A scanner unit 30 is a unit that optically scans the contents of a document in accordance with an instruction of the user and generates an image of the document.

The units connected to the I/O 25 of the image forming apparatus 2 are not limited to the units illustrated in Fig. 4. For example, in a case where the image forming apparatus 2 has a printing function, an image forming unit that forms an image on a recording medium such as paper using a coloring material is connected to the I/O 25.

Next, the operation of a document scanning process executed by the image forming apparatus 2 will be described.

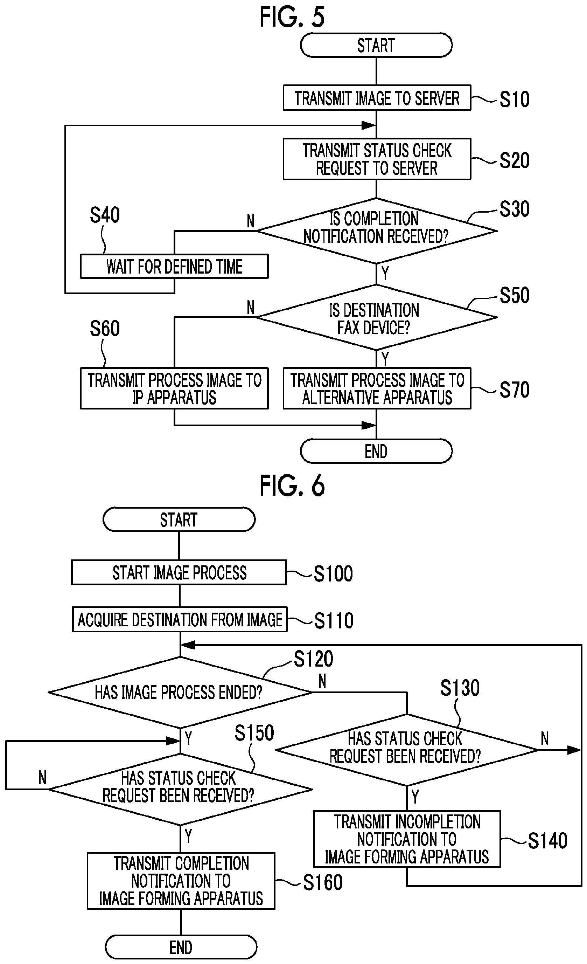

Fig. 5 is a flowchart illustrating an example of a flow of the document scanning process executed by the CPU 21 of the image forming apparatus 2 in a case where a document scanning instruction is received from the user.

An image forming program that defines the document scanning process is stored in advance in, for example, the non-volatile memory 24 of the image forming apparatus 2. The CPU 21 of the image forming apparatus 2 reads the image forming program stored in the non-volatile memory 24 and executes the document scanning process.

First, in Step S10, the CPU 21 forms an image of the document by scanning the document with the scanner unit 30, and transmits the formed image to the server 1. Thus, the server 1 executes a process of executing an image process on the image received from the image forming apparatus 2 to generate a process image, and acquiring the destination of the document, that is, the destination of the process image from the process image.

In Step S20, the CPU 21 transmits a status check request to the server 1 in order to check the process status of the image process requested to the server 1.

In Step S30, the CPU 21 determines whether or not a completion notification notifying that the image process has completed has been received from the server 1 as a response to the status check request transmitted in Step S20. In a case where the completion notification is not received from the server 1, the process proceeds to Step S40.

In this case, in order to make the server 1 inquire about the process status of the image process again after a certain time, in Step S40, the CPU 21 waits until the defined time elapses. The defined time is stored in advance in, for example, the non-volatile memory 24, and the CPU 21 acquires the defined time from the non-volatile memory 24. The defined time is, for example, a value that can be changed by the administrator of the image processing system 100.

In a case where the waiting time reaches the defined time, the process proceeds to Step S20, and the CPU 21 transmits the status check request to the server 1 again. Re-transmission of the status check request is continued until it is determined that the completion notification has been received from the server 1 by the determination process in Step S30.

In a case where it is determined that the completion notification has been received from the server 1 by the determination process in Step S30, the process proceeds to Step S50.

Since the process image and the process result are added to the completion notification, in Step S50, the CPU 21 acquires the destination of the process image from the process result. Then, the CPU 21 determines whether or not the destination of the process image is the fax device 3. The destination of the process image is represented by, for example, a fax number in a case where the destination is the fax device 3, and is represented by an IP address or a device name in a case where the destination is an IP apparatus. In a case where the destination of the process image is the IP apparatus, the process proceeds to Step S60.

In this case, the image forming apparatus 2 itself that has scanned the document can transmit the process image to the IP apparatus. Therefore, in Step S60, the CPU 21 transmits the process image to the IP apparatus represented by the destination, and ends the document scanning process illustrated in Fig. 5.

On the other hand, in a case where the destination of the process image is the fax device 3, the process proceeds to Step S70.

Since the image forming apparatus 2 that has scanned the document does not have a fax function, in Step S70, the CPU 21 detects an alternative apparatus 2A connected to the internal communication line 5. Specifically, the CPU 21 detects one alternative apparatus 2A by referring to alternative apparatus information including the destination of at least one alternative apparatus 2A set in advance by the administrator of the image processing system 100. The alternative apparatus information is, for example, information stored in advance in the non-volatile memory 24.

In a case where a plurality of alternative apparatuses 2A are registered in the alternative apparatus information, the CPU 21 detects any one of the alternative apparatuses 2A. Then, the CPU 21 transfers the process image and the destination of the process image received from the server 1 to the detected alternative apparatus 2A, and transmits a request to the alternative apparatus 2A to transmit the transferred process image to the fax device 3 represented by the destination of the process image.

As a result, the alternative apparatus 2A transmits the process image to the fax device 3 designated by the destination instead of the image forming apparatus 2 that has scanned the document. Therefore, the document scanned by the image forming apparatus 2 that does not have the fax function is transmitted to the fax device 3 from the inside of the firewall 4 via the fax line 7. As described above, the document scanning process illustrated in Fig. 5 is ended.

In the document scanning process illustrated in Fig. 5, an example in which, in a case where the destination of the process image is the fax device 3, the CPU 21 detects the alternative apparatus 2A by referring to the alternative apparatus information set in advance by the administrator of the image processing system 100 has been described. However, the detection method of the alternative apparatus 2A is not limited to this. For example, the CPU 21 may detect the alternative apparatus 2A with reference to a management information base (MIB). The MIB is a management information base that is on the inside of the firewall 4 and is provided in each IP apparatus connected by the internal communication line 5. The MIB includes, for example, information regarding a system configuration and performance of the IP apparatus. Therefore, the CPU 21 may detect the image forming apparatus 2 having the fax function by referring to the MIB of each IP apparatus connected by the internal communication line 5.

In a case where a plurality of alternative apparatuses 2A are detected as a result of detecting the alternative apparatus 2A, the CPU 21 selects any one of the alternative apparatuses 2A from the plurality of alternative apparatuses 2A. In this case, the CPU 21 may randomly select one alternative apparatus 2A from the plurality of alternative apparatuses 2A, or may select one alternative apparatus 2A as follows.

For example, the CPU 21 acquires a fax usage status in each alternative apparatus 2A via the internal communication line 5. In the alternative apparatus 2A during fax transmission or fax reception, it is not possible to transmit the process image until the use of the fax is ended. Thus, the CPU 21 may select the alternative apparatus 2A that does not perform fax communication among a plurality of alternative apparatuses 2A.

Further, for example, it is considered that the user who has scanned the document goes to the installation location of the alternative apparatus 2A, due to a trouble in the alternative apparatus 2A caused by the fax transmission or the like. Thus, the CPU 21 may select the alternative apparatus 2A in the place closest from the image forming apparatus 2. In this case, the distance between the image forming apparatus 2 and each alternative apparatus 2A may be stored in advance in, for example, the non-volatile memory 24.

In order to distribute the load, the CPU 21 may refer to the MIB of each alternative apparatus 2A and select the alternative apparatus 2A having the lowest load factor.

Since the transmission sound generated in the case of fax transmission may cause annoyance to people near the alternative apparatus 2A, the CPU 21 may select the alternative apparatus 2A near which the number of users is as small as possible. The position of each user may be specified by using, for example, the position information of the user obtained from an infrared camera mounted on a ceiling or the like, or the position information of the user obtained from a smartphone carried by each user. The position information of each alternative apparatus 2A may be stored in advance in, for example, the non-volatile memory 24.

In a case where the number of times of re-transmitting the status check request reaches a predetermined number of times, the CPU 21 may end the retransmission of the status check request and end the document scanning process illustrated in Fig. 5. In this case, since it means that the image process in the server 1 has not been completed for some reason, the CPU 21 displays a message notifying that the document scanning process has failed, on the display unit 29 of the image forming apparatus 2.

Next, the operation of the server process executed by the server 1 after the document scanning process by the image forming apparatus 2 will be described.

Fig. 6 is a flowchart illustrating an example of a flow of the server process executed by the CPU 11 of the server 1 in a case where the image of a document is received from the image forming apparatus 2.

A server program that defines the server process is stored in advance in, for example, the non-volatile memory 14 of the server 1. The CPU 11 of the server 1 reads the server program stored in the non-volatile memory 14 and executes the server process.

First, in Step S100, the CPU 11 starts an image process on the image of the document received from the image forming apparatus 2. The content of the image process to be executed is instructed by the image forming apparatus 2. Here, as an example, the OCR process is started on the image of the document.

In Step S110, the CPU 11 acquires the destination of a process image from the process image in the middle of being image-processed and stores the destination in the RAM 13.

In Step S120, the CPU 11 determines whether or not the image process started in Step S100 has ended. In a case where the image process is not yet ended, the process proceeds to Step S130.

As described in the process of Step S20 in Fig. 5, the image forming apparatus 2 that has transmitted the image to the server 1 transmits a status check request to the server 1 in order to check the process status of the image process. Therefore, in Step S130, the CPU 11 determines whether or not the status check request is received from the image forming apparatus 2 being the transmission source of the image. Each time the server 1 receives some pieces of data from the image forming apparatus 2, the server 1 acquires the apparatus ID of the image forming apparatus 2 being the transmission source of the data. Thus, by comparing the apparatus ID acquired in connection with the reception of the image with the apparatus ID acquired in connection with the reception of the status check request, the CPU 11 may determine whether or not to receive the status check request from the image forming apparatus 2 being the transmission source of the image. The apparatus ID is an apparatus identifier uniquely assigned to each IP apparatus in advance. The apparatus ID is assigned to each IP apparatus by, for example, the administrator of the image processing system 100. For example, a media access control (MAC) address of the IP apparatus may be used as the apparatus ID. In a case where the status check request is received from the image forming apparatus 2, the process proceeds to Step S140.

In this case, since the image process is not yet completed, in Step S140, the CPU 11 transmits an incompletion notification for notifying that the image process is not completed, to the image forming apparatus 2 being the transmission source of the status check request as a response to the status check request. Then, the process proceeds to Step S120. That is, in a case where the status check request is received from the image forming apparatus 2 during the image process, the CPU 11 transmits the incompletion notification to the image forming apparatus 2 each time the status check request is received.

In a case where it is determined that the status check request has not been received from the image forming apparatus 2 by the determination process of Step S130, the process proceeds to Step S120 without executing the process of Step S140 because it is not necessary to transmit the incompletion notification.

On the other hand, in a case where it is determined that the image process has ended by the determination process in Step S120, the process proceeds to Step S150.

In order to return the process image on which the image process has ended to the image forming apparatus 2, in Step S150, the CPU 11 determines whether or not the status check request has been received from the image forming apparatus 2 being the transmission source of the image. In a case where the status check request is not yet received, the determination process of Step S150 is repeatedly executed, and the process waits until the status check request is received. On the other hand, in a case where the status check request has been received, the process proceeds to Step S160.

In Step S160, the CPU 11 transmits, to the image forming apparatus 2 being the transmission source of the status check request, a completion notification together with the process image obtained by executing the image process and the process result including the destination of the process image acquired in Step S110. Then, the CPU 11 ends the server process illustrated in Fig. 6.

As described above, according to the image processing system 100 according to the first exemplary embodiment, the image forming apparatus 2 that has scanned a document acquires the process image of the document from the server 1, and, in a case where the destination of the process image is the fax device 3, the image forming apparatus 2 transfers the process image of the document to the alternative apparatus 2A to request the alternative apparatus 2A to transmit the process image.

In a case where the image forming apparatus 2 that has scanned the document has the fax function, in Step S70 of the document scanning process in Fig. 5, the CPU 21 may transmit the process image received from the server 1 together with the completion notification to the fax device 3 represented by the destination instead of transmitting the process image to the alternative apparatus 2A.

### <Second Exemplary Embodiment>

In a second exemplary embodiment, an image processing system 100 that causes the alternative apparatus 2A to transmit the process image to the fax device 3 without transferring the process image from the image forming apparatus 2 to the alternative apparatus 2A will be described.

Since the system configuration of the image processing system 100 according to the second exemplary embodiment is identical to the system configuration example of the image processing system 100 according to the first exemplary embodiment illustrated in Fig. 1, the description thereof will be omitted.

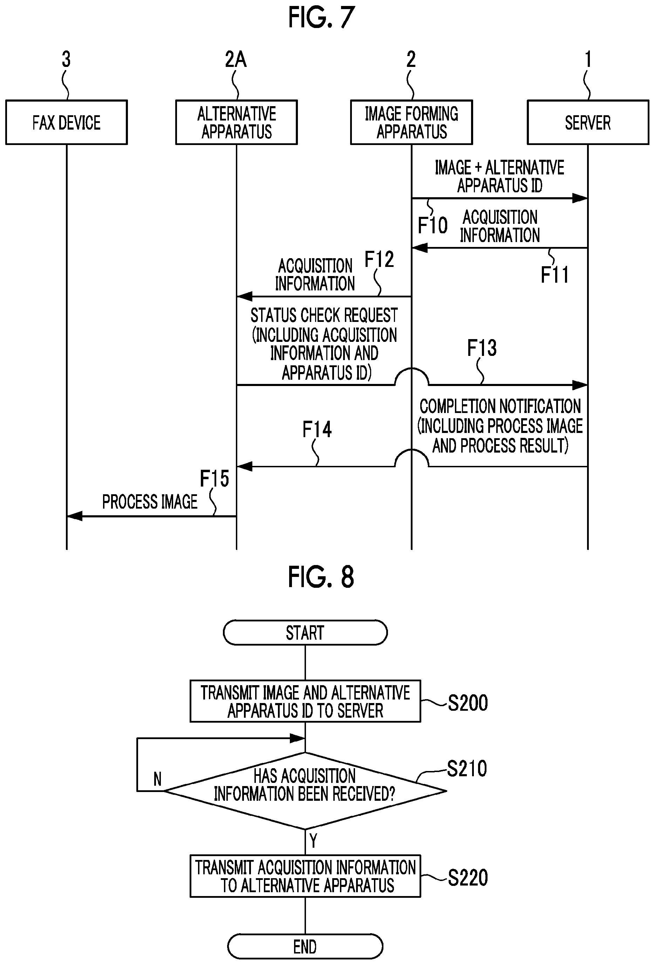

Fig. 7 is a sequence diagram illustrating an example of a data flow in the image processing system 100 in a case where the destination of the document scanned by the image forming apparatus 2 is the fax device 3.

First, the image forming apparatus 2 transmits the image of a document scanned by the scanner and an alternative apparatus ID to the server 1 (Fig. 7: Sequence F10). The alternative apparatus ID is an apparatus ID of the alternative apparatus 2A. That is, the image forming apparatus 2 transmits, to the server 1, the apparatus ID of the alternative apparatus 2A in advance together with the request for the image process.

The server 1 that has received the image of the document executes the image process on the image, acquires the destination of the document from the process image, and transmits, to the image forming apparatus 2, acquisition information required to acquire the process image of the document obtained by the image process (Fig. 7: Sequence F11).

The acquisition information is information used for authentication in a case where the alternative apparatus 2A represented by the alternative apparatus ID acquires the process image from the server 1 instead of the image forming apparatus 2 that has transmitted the image of the document. The server 1 generates acquisition information for each process image, and stores the process image, the alternative apparatus ID received from the image forming apparatus 2, and the acquired information for acquiring the generated process image in association with each other.

The image forming apparatus 2 that has received the acquired information from the server 1 transfers the acquisition information to the alternative apparatus 2A represented by the alternative apparatus ID transmitted to the server 1 in Sequence F10 (Fig. 7: Sequence F12).

In order to check the process status of the image process requested to the server 1 by the image forming apparatus 2 to which the acquired information has been transferred, instead of the image forming apparatus 2, the alternative apparatus 2Athat has received the acquisition information transmits the status check request to the server 1 (Fig. 7: Sequence F13). In this case, the alternative apparatus 2A transmits the status check request to the server 1 together with the acquisition information and the apparatus ID.

In the server 1, the image forming apparatus 2 checks whether the alternative apparatus 2A being the transmission source of the status check request is the alternative apparatus 2A designated by the image forming apparatus 2, by using the alternative apparatus ID received from the image forming apparatus 2 in Sequence F10 and the acquisition information received from the alternative apparatus 2A. In a case where the alternative apparatus 2A being the transmission source of the status check request is the alternative apparatus 2A designated by the image forming apparatus 2, the server 1 transmits a completion notification of the image process to the alternative apparatus 2A being the transmission source of the status check request in response to the status check request, after the end of the image process (Fig. 7: Sequence F14). A process result of the image process and the process image of the document obtained by the image process are added to the completion notification. In addition, the process result of the image process includes the destination of the document acquired by the server 1 by the image process.

The alternative apparatus 2A that has received the completion notification from the server 1 refers to the destination notified from the server 1. In a case where the destination is the fax device 3, the alternative apparatus 2A transmits the process image to the fax device 3 designated by the destination via the fax line 7 (Fig. 7: Sequence F 15).

As described above, the process image of the document scanned by the image forming apparatus 2 is delivered to the fax device 3.

Next, the operation of a document scanning process executed by the image forming apparatus 2 will be described.

Fig. 8 is a flowchart illustrating an example of a flow of the document scanning process executed by the CPU 21 of the image forming apparatus 2 in a case where a document scanning instruction is received from the user.

The configuration of the main part of the electrical system of the image forming apparatus 2 is identical to the configuration example of the main part of the image forming apparatus 2 according to the first exemplary embodiment illustrated in Fig. 4.

First, in Step S200, the CPU 21 generates an image of a document by scanning the document with the scanner unit 30. The CPU 21 detects an alternative apparatus 2A connected to the internal communication line 5 by using the method described in the first exemplary embodiment. That is, the CPU 21 detects the alternative apparatus 2A in a situation where it is not yet known whether or not the destination of the document is the fax device 3, and requests the detected alternative apparatus 2A to transmit the process image. Therefore, the CPU 21 transmits the apparatus ID of the detected alternative apparatus 2A, that is, the alternative apparatus ID, together with the generated image, to the server 1.

Thus, in the server 1, an image process is started on the image received from the image forming apparatus 2, and a process of generating the acquisition information and transmitting the acquisition information to the image forming apparatus 2 as the transmission source of the image is executed. For the acquisition information, for example, a process number uniquely assigned to each image process is used to identify the requested image process.

In Step S210, the CPU 21 determines whether or not the acquisition information has been received from the server 1 as a response of the image and the alternative apparatus ID transmitted in Step S200. In a case where the acquisition information is not received, the determination process of Step S210 is repeatedly executed, and the process waits until the acquisition information is received. In a case where the acquisition information has been received, the process proceeds to Step S220.

In Step S220, the CPU 21 transfers the acquisition information received from the server 1 to the alternative apparatus 2A detected in the process of Step S200, that is, to the alternative apparatus 2A represented by the alternative apparatus ID transmitted to the server 1.

As described above, the document scanning process illustrated in Fig. 8 is ended, and the alternative apparatus 2A is requested to transmit the process image corresponding to the image of the document transmitted to the server 1 in Step S200 of Fig. 8.

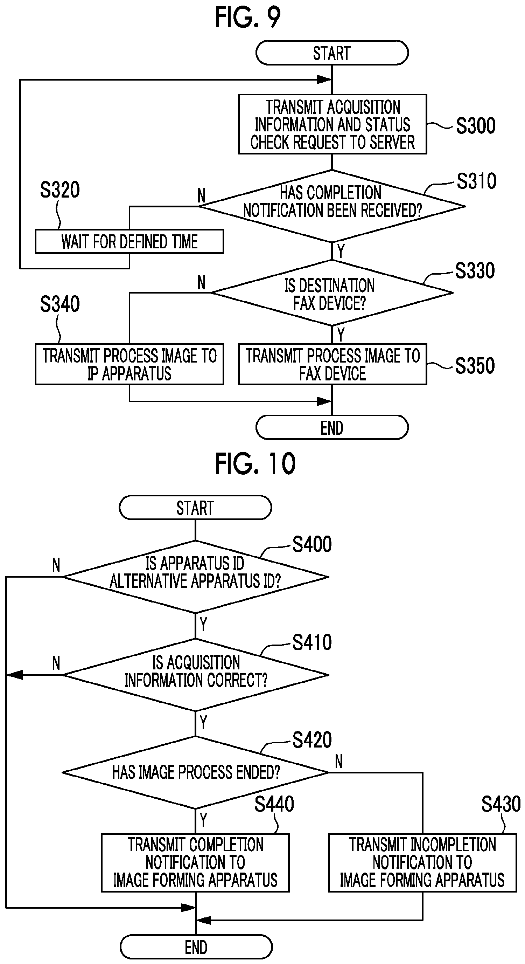

Fig. 9 is a flowchart illustrating an example of a flow of a document transmission process executed by the CPU 21 of the alternative apparatus 2A in a case where the acquisition information is received from another image forming apparatus 2.

An image forming program that defines the document transmission process is stored in advance, for example, in the non-volatile memory 24 of the alternative apparatus 2A. The CPU 21 of the alternative apparatus 2A reads the image forming program stored in the non-volatile memory 24 and executes the document transmission process.

Since the alternative apparatus 2Ais an example of the image forming apparatus 2, the configuration of the main part of the electrical system of the alternative apparatus 2A is also identical to the configuration example of the main part of the image forming apparatus 2 according to the first exemplary embodiment illustrated in Fig. 4.

In Step S300, in order to check the process status of the image process requested to the server 1 by the image forming apparatus 2 to which the acquisition information has been transferred, the CPU 21 transmits a status check request to the server 1 together with the received acquisition information.

In Step S310, the CPU 21 determines whether or not a completion notification notifying that the image process has completed has been received from the server 1 as a response to the status check request transmitted in Step S300. In a case where the completion notification is not received from the server 1, the process proceeds to Step S320.

In this case, in order to make the server 1 inquire about the process status of the image process again after a certain time, in Step S320, the CPU 21 waits until the defined time elapses. In a case where the waiting time reaches the defined time, the process proceeds to Step S300, and the CPU 21 transmits the status check request to the server 1 together with the acquisition information again. Re-transmission of the status check request is continued until it is determined that the completion notification has been received from the server 1 by the determination process in Step S310.

In a case where it is determined that the completion notification has been received from the server 1 by the determination process in Step S310, the process proceeds to Step S330.

In Step S330, the CPU 21 acquires the destination of the process image from the process result added to the completion notification. Then, the CPU 21 determines whether or not the destination of the process image is the fax device 3. In a case where the destination of the process image is the IP apparatus, the process proceeds to Step S340.

In Step S340, the CPU 21 transmits the process image received from the server 1 together with the completion notification to the IP apparatus represented by the destination, and ends the document transmission process illustrated in Fig. 9.

On the other hand, in a case where the destination of the process image is the fax device 3, the process proceeds to Step S350. Since the alternative apparatus 2A has the fax function, in Step S350, the CPU 21 transmits the process image received from the server 1 together with the completion notification to the fax device 3 represented by the destination, and ends the document transmission process illustrated in Fig. 9.

Thus, the alternative apparatus 2A receives the process image of the document from the server 1 instead of the image forming apparatus 2 that has scanned the document, and transmits the process image of the document to the designated destination. Since the alternative apparatus 2A acquires the process image from the server 1, the image forming apparatus 2 that has scanned the document does not have to transfer the process image to the alternative apparatus 2A. Therefore, the traffic volume of the internal communication line 5 may be reduced as compared with the image processing system 100 described in the first exemplary embodiment.

Next, the operation of the server 1 that has received the image of the document and the alternative apparatus ID from the image forming apparatus 2 in the process of Step S200 in Fig. 8 will be described.

Fig. 10 is a flowchart illustrating an example of a flow of the server process executed by the CPU 11 of the server 1 in a case where the image of the document and the alternative apparatus ID are received from the image forming apparatus 2.

The configuration of the main part of the electrical system of the server 1 is identical to the configuration example of the main part of the server 1 according to the first exemplary embodiment illustrated in Fig. 3. Further, it is assumed that the server 1 starts the image process instructed already from the image forming apparatus 2 on the image of the document received from the image forming apparatus 2, and acquires the destination of the process image.

In Step S400, the CPU 11 determines whether or not the apparatus ID of the image forming apparatus 2 (in this case, the alternative apparatus 2A) that has transmitted the status check request is identical to the alternative apparatus ID received from the image forming apparatus 2 by the process of Step S200 in Fig. 8.

As described above, each time the server 1 receives data from the image forming apparatus 2, the server 1 acquires the apparatus ID of the image forming apparatus 2 being the transmission source of the data. Therefore, the CPU 11 compares the apparatus ID of the alternative apparatus 2A acquired in response to the reception of the status check request with the alternative apparatus ID.

In a case where the apparatus ID of the alternative apparatus 2A being the transmission source of the status check request is different from the alternative apparatus ID, it means that the alternative apparatus 2A being the transmission source of the status check request is not the alternative apparatus 2A designated by the image forming apparatus 2. Therefore, in order to prevent an occurrence of a situation in which the process image of the document is passed to the alternative apparatus 2A that has transmitted the status check request, the CPU 11 ends the document transmission process illustrated in Fig. 10.

In a case where the apparatus ID of the alternative apparatus 2A being the transmission source of the status check request is identical to the alternative apparatus ID, it means that the alternative apparatus 2A being the transmission source of the status check request is the alternative apparatus 2A designated by the image forming apparatus 2. Therefore, the process proceeds to Step S410, and further, it is determined whether or not the alternative apparatus 2A being the transmission source of the status check request is the alternative apparatus 2A designated by the image forming apparatus 2.

The server 1 issues acquisition information known only to the image forming apparatus 2 to the image forming apparatus 2 that has requested the image process (Fig. 7: Sequence F11). Therefore, in a case where the alternative apparatus 2A being the transmission source of the status check request is the correct alternative apparatus 2A designated by the image forming apparatus 2, the image as an image process target, which has been received from the image forming apparatus 2 by the server 1 and the acquisition information transmitted to the image forming apparatus 2 in response to the alternative apparatus ID may be added to the status check request.

Therefore, in Step S410, the CPU 11 determines whether or not the acquisition information received together with the status check request is the acquisition information stored in the non-volatile memory 14 in association with the received alternative apparatus ID. That is, the CPU 11 determines whether or not the acquisition information received together with the status check request is the correct acquisition information. In a case where the acquisition information received together with the status check request is not the correct acquisition information, the alternative apparatus 2A being the transmission source of the status check request is not the alternative apparatus 2A designated by the image forming apparatus 2. Therefore, the CPU 11 ends the document transmission process illustrated in Fig. 10.

On the other hand, in a case where the acquisition information received together with the status check request is the correct acquisition information, the alternative apparatus 2Abeing the transmission source of the status check request is the correct alternative apparatus 2A designated by the image forming apparatus 2. Therefore, the process proceeds to Step S420.

In Step S420, the CPU 11 determines whether or not the image process has ended. In a case where the image process is not yet ended, the process proceeds to Step S430.

In Step S430, the CPU 11 transmits an incompletion notification as a response to the status check request to the alternative apparatus 2A as the transmission source of the status check request, and ends the server process illustrated in Fig. 10. As a result, the determination process in Step S310 in the document transmission process of the alternative apparatus 2A illustrated in Fig. 9 results in a negative determination. The alternative apparatus 2A that has received the incompletion notification re-transmits the status check request after the defined time has elapsed. Thus, the CPU 11 executes the server process illustrated in Fig. 10 for each status check request.

On the other hand, in a case where it is determined that the image process is ended by the determination process in Step S420, the process proceeds to Step S440.

In Step S440, the CPU 11 transmits a completion notification to the alternative apparatus 2A as the transmission source of the status check request together with the process image obtained by executing the image process and the process result including the destination of the process image. Then, the CPU 11 ends the server process illustrated in Fig. 10. As a result, the determination process in Step S310 in the document transmission process of the alternative apparatus 2A illustrated in Fig. 9 results in a positive determination, and the alternative apparatus 2A transmits the process image of the document to the designated destination.

According to the image processing system 100 disclosed as described above, even though the image forming apparatus 2 caused to scan the document by the user does not have the fax function, and the transmission destination of the scanned document is the fax device 3, the document is transmitted from the alternative apparatus 2A on the inside of the firewall 4.

Although one aspect of the image processing system 100 has been described above using the exemplary embodiments, the disclosed form of the image processing system 100 is an example, and the form of the image processing system 100 is not limited to the scope described in the exemplary embodiment. Various changes or improvements may be made to the exemplary embodiments without departing from the gist of the present disclosure, and the changed or improved modes are also included in the technical scope of the present disclosure. For example, the internal process order in each process illustrated in Figs. 5, 6, and 8 to 10 may be changed without departing from the gist of the present disclosure.

Further, in the above-described exemplary embodiments, as an example, a mode in which each process illustrated in Figs. 5, 6, and 8 to 10 is realized by software has been described. However, the processes equivalent to the flowcharts may be processed by hardware. In this case, the speed of the process can be increased as compared to the case where each process is realized by software.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In the above exemplary embodiments, an example in which the server program is stored in the non-volatile memory 14 of the computer 10 and the image forming program is stored in the non-volatile memory 24 of the computer 20 has been described. The storage destinations of the respective programs are not limited to the non-volatile memory 14 and the non-volatile memory 24. The server program in the present disclosure can also be provided in a form of being recorded on a storage medium readable by the computer 10. The image forming program according to the present disclosure can also be provided in a form of being recorded on a storage medium readable by the computer 20. For example, the server program and the image forming program may be provided in a form of being recorded on an optical disc such as a compact disk read only memory (CD-ROM) and a digital versatile disk read only memory (DVD-ROM). The server program and the image forming program may be provided in a form of being recorded in a portable semiconductor memory such as a universal serial bus (USB) memory and a memory card. The ROM 12, the ROM 22, the non-volatile memory 14, the non-volatile memory 24, the CD-ROM, the DVD-ROM, the USB, and the memory card are examples of the non-transitory storage medium.

Further, the server 1 may download the server program from an external device (not illustrated) connected to the internal communication line 5 or the external communication line 6 via the communication unit 17, and store the downloaded server program in the storage device. Further, the image forming apparatus 2 may also download an image forming program from an external device via the communication unit 27 and store the downloaded image forming program in the storage device.

In this case, the CPU 11 of the server 1 reads the server program downloaded from the external device from the storage device and executes the server process. The CPU 21 of the image forming apparatus 2 reads the image forming program downloaded from the external device from the storage device and executes the document scanning process. The CPU 21 of the alternative apparatus 2A reads the image forming program downloaded from the external device from the storage device and executes the document transmission process.

The supplementary notes according to the present exemplary embodiment are described below.

### (((1)))

An image forming apparatus comprising:
a processor configured to:
form an image;
transmit the image to a server that generates a processed image of the image by executing a designated image process on the image and is on an outside of a firewall; and
in a case where the image includes designation information designating the processed image to be transmitted to an instructed transmission destination via a fax line, request an alternative apparatus to fax-transmit the processed image to the transmission destination, the alternative apparatus being on an inside of the firewall together and having a fax function.

### (((2)))

The image forming apparatus according to (((1))), wherein the processor is configured to:
receive the processed image from the server;
detect the alternative apparatus;
transfer the processed image received from the server to the alternative apparatus; and
request the alternative apparatus to fax-transmit the processed image to the transmission destination.

### (((3)))

The image forming apparatus according to (((1))), wherein the processor is configured to:
transmit apparatus identification information for identifying the alternative apparatus detected in advance to the server together with the image;
receive acquisition information from the server, the acquisition information being used in a case where the alternative apparatus acquires the processed image from the server;
transfer the acquisition information received from the server to the alternative apparatus to cause the alternative apparatus to acquire a process result of the image from the server by using the acquisition information and to acquire the processed image from the server; and
in a case where the processed image is designated to be transmitted to the transmission destination via the fax line in the acquired process result of the image, request the acquired processed image to be fax-transmitted to the transmission destination.

### (((4)))

The image forming apparatus according to (((2))) or (((3))), wherein the processor is configured to:
detect one alternative apparatus from a plurality of the alternative apparatuses set in advance by an administrator.

### (((5)))

The image forming apparatus according to (((2))) or (((3))), wherein the processor is configured to:
detect the alternative apparatus by referring to a management information base of each apparatus that is on the inside of the firewall together and is connected to a communication line.

### (((6)))

The image forming apparatus according to (((5))), wherein the processor is configured to:
in a case where a plurality of the alternative apparatuses are detected, acquire a fax usage status in each of the alternative apparatuses via the communication line; and
request the alternative apparatus that is not performing fax transmission to fax-transmit the processed image to the transmission destination among the plurality of detected alternative apparatuses.

### (((7)))

An image forming program causing a processor to execute a process comprising:
forming an image;
transmitting the image to a server that generates a processed image of the image by executing a designated image process on the image and is on an outside of a firewall; and
requesting, in a case where the image includes designation information designating the processed image to be transmitted to an instructed transmission destination via a fax line, an alternative apparatus to fax-transmit the processed image to the transmission destination, the alternative apparatus being on an inside of the firewall together and having a fax function.

### (((8)))

An image forming system comprising:
a server being on an outside of a firewall and including a first processor configured to:
   acquire an image;
   generate a processed image of the acquired image by executing a designated image process on the image; and
   specify a transmission destination of the processed image; and
an image forming apparatus including a second processor configured to:
   form an image;
   transmit the image to the server; and
   in a case where the transmission destination of the processed image acquired from the image by the server is an apparatus connected via a fax line, an alternative apparatus to fax-transmit the processed image to the transmission destination acquired from the image, request the alternative apparatus being on an inside of the firewall and having a fax function.

According to (((1))), (((7))), and (((8))), there is an effect that, even in a case where the image forming apparatus that requests the server to execute the image process does not have a fax function, it is possible to transmit the processed image obtained by the image process of the server to the designated transmission destination via the fax line.

According to (((2))), the image forming apparatus has an effect that it is possible to fax-transmit the processed image to the alternative apparatus without causing the alternative apparatus to communicate with the server.

According to (((3))), the image forming apparatus has an effect that it is possible to fax-transmit the processed image to the alternative apparatus without acquiring the processed image from the server.

According to (((4))), there is an effect that it is possible to fax-transmit the processed image to the alternative apparatus without causing a user to select the alternative apparatus.

According to (((5))), there is an effect that it is possible to detect the alternative apparatus even though the administrator registers the alternative apparatus in the image forming apparatus in advance.

According to (((6))), there is an effect that it is possible to quickly transmit the processed image to the transmission destination as compared with a case where the alternative apparatus during the fax transmission is requested to perform the fax transmission.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: server
2: image forming apparatus
2A: alternative apparatus
3: fax device
4: firewall
5: internal communication line
6: external communication line
7: fax line
10 (20): computer
11 (21): CPU
12 (22): ROM
13 (23): RAM
14 (24): non-volatile memory
15 (25): I/O
16 (26): bus
17 (27): communication unit
18 (28): input unit
19 (29): display unit
30: scanner unit
100: image processing system

## Claims

1. An image forming apparatus comprising:
a processor configured to:
form an image;
transmit the image to a server that generates a processed image of the image by executing a designated image process on the image and is on an outside of a firewall; and
in a case where the image includes designation information designating the processed image to be transmitted to an instructed transmission destination via a fax line, request an alternative apparatus to fax-transmit the processed image to the transmission destination, the alternative apparatus being on an inside of the firewall together and having a fax function.

2. The image forming apparatus according to claim 1, wherein the processor is configured to:
receive the processed image from the server;
detect the alternative apparatus;
transfer the processed image received from the server to the alternative apparatus; and
request the alternative apparatus to fax-transmit the processed image to the transmission destination.

3. The image forming apparatus according to claim 1, wherein the processor is configured to:
transmit apparatus identification information for identifying the alternative apparatus detected in advance to the server together with the image;
receive acquisition information from the server, the acquisition information being used in a case where the alternative apparatus acquires the processed image from the server;
transfer the acquisition information received from the server to the alternative apparatus to cause the alternative apparatus to acquire a process result of the image from the server by using the acquisition information and to acquire the processed image from the server; and
in a case where the processed image is designated to be transmitted to the transmission destination via the fax line in the acquired process result of the image, request the acquired processed image to be fax-transmitted to the transmission destination.

4. The image forming apparatus according to claim 2 or 3, wherein the processor is configured to:
detect one alternative apparatus from a plurality of the alternative apparatuses set in advance by an administrator.

5. The image forming apparatus according to claim 2 or 3, wherein the processor is configured to:
detect the alternative apparatus by referring to a management information base of each apparatus that is on the inside of the firewall together and is connected to a communication line.

6. The image forming apparatus according to claim 5, wherein the processor is configured to:
in a case where a plurality of the alternative apparatuses are detected, acquire a fax usage status in each of the alternative apparatuses via the communication line; and
request the alternative apparatus that is not performing fax transmission to fax-transmit the processed image to the transmission destination among the plurality of detected alternative apparatuses.

7. An image forming program causing a processor to execute a process comprising:
forming an image;
transmitting the image to a server that generates a processed image of the image by executing a designated image process on the image and is on an outside of a firewall; and
requesting, in a case where the image includes designation information designating the processed image to be transmitted to an instructed transmission destination via a fax line, an alternative apparatus to fax-transmit the processed image to the transmission destination, the alternative apparatus being on an inside of the firewall together and having a fax function.

8. An image forming system comprising:
a server being on an outside of a firewall and including a first processor configured to:
acquire an image;
generate a processed image of the acquired image by executing a designated image process on the image; and
specify a transmission destination of the processed image; and
an image forming apparatus including a second processor configured to:
form an image;
transmit the image to the server; and
in a case where the transmission destination of the processed image acquired from the image by the server is an apparatus connected via a fax line, an alternative apparatus to fax-transmit the processed image to the transmission destination acquired from the image, request the alternative apparatus being on an inside of the firewall and having a fax function.

9. An image forming method comprising:
forming an image;
transmitting the image to a server that generates a processed image of the image by executing a designated image process on the image and is on an outside of a firewall; and
requesting, in a case where the image includes designation information designating the processed image to be transmitted to an instructed transmission destination via a fax line, an alternative apparatus to fax-transmit the processed image to the transmission destination, the alternative apparatus being on an inside of the firewall together and having a fax function.
